# EUROPEAN PATENT APPLICATION

(11) **EP 2 541 725 A1**
(43) Date of publication of application: **02.01.2013**
(21) Application number: 11747484.1
(22) Date of filing: 25.02.2011
(51) Int. Cl.: H02J 7/00, B60L 11/18, H01M 10/44, H02J 7/10

(54) **CHARGE MANAGEMENT SYSTEM FOR RECHARGEABLE FORKLIFT, AND CHARGE MANAGEMENT METHOD**

(30) Priority: 25.02.2010 JP 2010040037
(71) Applicant: Mitsubishi Heavy Industries, Ltd., Tokyo 108-8215 (JP)
(72) Inventor: AKAHANE Fumihiro, Tokyo 108-8215 (JP); TSUMAKI Toshimichi, Tokyo 108-8215 (JP)
(74) Representative: Henkel, Breuer & Partner
(86) International application number: PCT/JP2011/054235
(87) International publication number: WO 2011/105528

(57) **Abstract**

A running schedule for forklifts (1-4) is configured from a plurality of operating cycles (C1-C7). Each operating cycle (C1-C7) in the running schedule is configured to have a charge programme (B1-B7) which is set to be of a shorter duration than a continuous running capability duration corresponding to the capacity of a rechargeable battery, and a run programme (A1-A7) which is implemented after charging.

## Description

### Technical Field

The present invention relates to a charge management system for rechargeable battery-powered forklift trucks which is applicable to quickly chargeable lithium ion batteries (secondary batteries) and also to a charge management method thereof.
The present application claims the right of priority to Japanese Patent Application No. 2010-40037 filed on February 25, 2010, in Japan, the content of which is incorporated herein reference.

### Background Art

A general-use electric forklift truck is equipped with a generally used lead acid battery, and eight hours or more is required to fully charge the battery.
Most of the above-described lead acid batteries are designed for continuous use of about eight hours after being fully charged, although this depends on the frequency of use. Further, most of the batteries for driving electric forklift trucks are lead acid batteries and most of them are not considered quick charge batteries. Even if a quick charge is available, at least three to four hours will be required for a full charge.
It is noted that in the following description, in contrast to the term "quick charge," normal prolonged charge is referred to as "slow charge."

However, the above-described lead acid batteries are disadvantageous in that the service life (number of charges or the like) is shortened when a quick charge is repeated than when a slow charge is repeated. Further, in generally used lead acid batteries, even if they are not to be fully charged but only to be charged to a minimum extent necessary for short-time use, there is required an idle charging time which is as long as the use time. For example, when the battery level of a secondary battery is at such an extent that the battery cannot be used any more (however, electricity necessary for traveling back to a battery charger is assumed to remain), slightly longer charging time which is, for example, substantially equal to only one hour of use (that is, one hour of charging time) is required. Thus, handling the battery only in a temporary and flexible manner is difficult.

Upon charging a lead acid battery, the temperature thereof is increased. Therefore, when the lead acid battery is equipped in a forklift truck and discharged during use, the battery is required to be cooled naturally until it is at a normal temperature. However, as described above, the cooling time is as long as the charging time. (If a slow charge is carried out for one hour for one hour of use, one hour is required for the charge and, further, another hour is required for natural cooling, and, as a result, it may be considered that the battery may not be used for two hours.) When a lead acid battery is used in a forklift truck, the forklift truck is used for about eight hours during the daytime. After use, slow charge is carried out for about eight hours, and the battery is thereafter cooled naturally for eight hours. Then, from the morning, the battery is again used for eight hours. Thereby, the battery is charged and used in a 24-hour cycle. As a result, one battery is used to cover only one shift (for example, 1/3 on one-day of three-shift use).

Patent Documents 1 to 3 have disclosed technologies of batteries used in rechargeable battery-powered forklift trucks as well as the exchange and management thereof. Regarding the technologies, for example, a system for charging a battery of a forklift truck which has been disclosed in the Patent Document 1 includes a battery charger for charging the battery, a detector which detects a battery drawing operation to output a detection signal thereof, and a controller which responds to the detection signal of the detector to control the battery charger, and evenly carries out a first one-time charge after detection of the detection signal of the battery drawing operation to decrease damage to the battery.

### [Prior Art Documents]

### [Patent Documents]

Patent Document 1: Japanese Published Unexamined Patent Application No. JP-A-2009-118596
Patent Document 2: Japanese Published Unexamined Patent Application No. JP-A-2004-266892
Patent Document 3: Japanese Published Unexamined Patent Application No. JP-A-2004-32869

### Summary of the Invention

### Problems to be Solved by the Invention

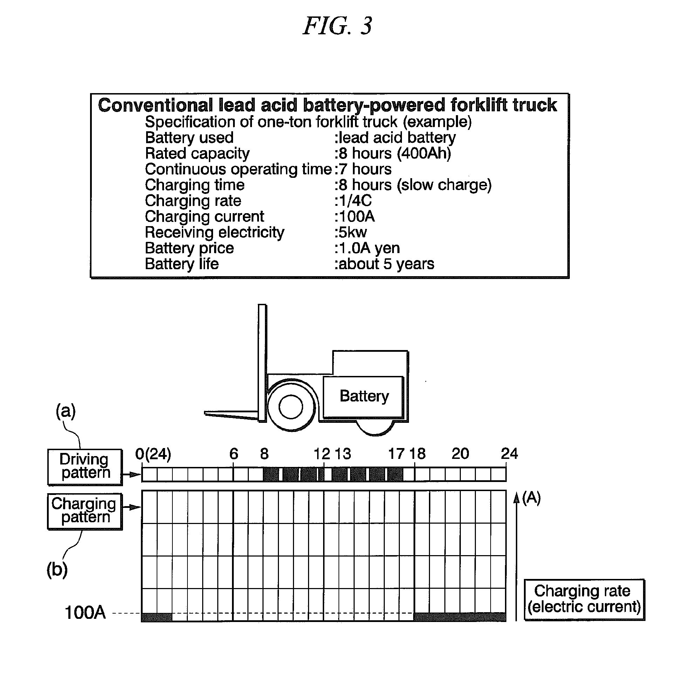

Moreover, in a battery which uses a lead acid battery, in order to fully secure an eight-hour operating time during the daytime, a large capacity battery is equipped, and also in order to attain "charge + natural cooling" which has been described above, a large amount of time is required. Then, this type of battery has been generally used in a small-size forklift truck (one-ton forklift truck) and charged at a cycle/rate shown in Fig. 3.
Fig. 3 shows a cycle/rate where, as indicated in a driving pattern (a), a battery-powered forklift truck is used at intervals from 8 am to 6 pm, thereafter, as indicated in a charging pattern (b), the battery is slowly charged for eight hours from 6 pm to 2 am (charging current of 100A, receiving electricity of 5kW), and the battery is also naturally cooled for six hours from 2 am to 8 am.

Then, in general, the above-described battery which uses a lead acid battery requires a long-time slow charge and natural cooling. It is, therefore, difficult to charge the battery at intervals, such as a temporary charge or supplementary charge. Further, the forklift truck is structured so that a space thereon is occupied mostly by the large-capacity lead acid battery, by which the forklift truck is restricted in layout and design.

Therefore, in place of the lead acid battery having the above restriction, it has been proposed that a secondary battery excellent in quick charging/discharging properties such as a lithium ion battery is equipped in a forklift truck.
However, if, as with a conventional forklift truck equipped with a lead acid battery, a secondary battery which is large enough in capacity to allow continuous use for about eight hours during the daytime is equipped in a forklift truck and a quick charge is attempted in a short time suitable for practical use, a battery charger used for this purpose requires an extremely large charging current. Thereby, there is a problem in actually providing this type of battery charger (in terms of performance, cost, and the like). Further, the battery charger receives an increased electric current. Installation of the battery charger capable of supplying such a large charging current will make it possible to carry out a short-time quick charge at any time due to the features of a lithium ion battery (capable of being quickly charged and free of natural cooling after charge). Thus, the lithium ion battery eliminates the restriction on single use of a lead acid battery only in one shift but will be able to realize efficient and flexible operation which allows two shifts or more in 24 hours.

However, since a large-capacity battery charger is required to receive a large current, a user encounters problems such as enhancement of facilities for receiving electricity, change in contract on use of electricity, and an increase in basic price. For example, in the Tokyo metropolitan area, when receiving electricity (quantity of electricity) is in excess of a maximum 50kW, a user has to set up a transformer station for receiving 6600 V, otherwise, the contract voltage would have been 220 V (an actual attempt to conduct electricity of 50kW or more at 220 V may result in overcapacity).

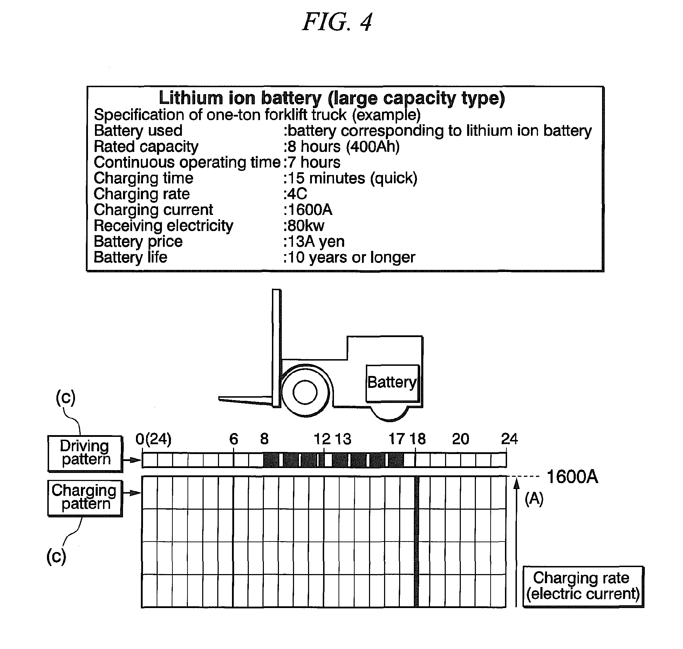

Fig. 4 shows a charging cycle/rate in the above case. The charging cycle/rate shown in Fig. 4 shows a case where, as indicated in a driving pattern (c), a battery-powered car is used at intervals from 8 am to 6 pm, thereafter, as indicated in a charging pattern (d), quick charge is carried out for 15 minutes from 6 pm to 6:15 pm (on the condition that the charging current is 1600A and the receiving electricity is 80kW). The above-described quick charge may require a significant cost burden such as enhancement of charging facilities as described above.

The present invention has been made in view of the above situation and provides a charge management system for rechargeable battery-powered forklift trucks capable of carrying out daytime work trouble-free without a significant cost burden such as enhancement of charging facilities, even if a quickly chargeable lithium ion battery (a secondary battery) is used.

### Means for Solving the Problem

The charge management system for rechargeable battery-powered forklift trucks in the present invention is a charge management system for a rechargeable battery-powered forklift truck, which is equipped with a secondary battery quickly chargeable by a battery charger. The charge management system is provided with a driving schedule preparing unit which prepares a driving schedule of the rechargeable battery-powered forklift truck, and a management unit which outputs a command to the rechargeable battery-powered forklift truck according to the driving schedule prepared by the driving schedule preparing unit. The driving schedule preparing unit constitutes the driving schedule of the rechargeable battery-powered forklift truck with a plurality of work cycles and also constitutes each of the work cycles of the driving schedule with a charging pattern which is set as a work period shorter than the continuously drivable time corresponding to a full charge capacity of the secondary battery or constitutes each of the work cycles in combination of the above charging pattern with a charging pattern corresponding to the full charge capacity.

In the charge management system for the rechargeable battery-powered forklift truck in the present invention, the length of a charging period immediately before a work period which is under a driving schedule and not yet performed may be decided based on expected operating electricity during a driving period which is a work period immediately after the charging period.

In the charge management system for the rechargeable battery-powered forklift truck in the present invention, the secondary battery may be a lithium ion battery with a capacity necessary for continuously driving for the longest work period in a driving pattern of each of the work cycles.
Further, each of the work cycles may be determined based on the driving pattern including a predetermined driving period and a predetermined charging period.
Still further, during working hours in the daytime, the charging pattern and the driving pattern may be alternately performed based on the work cycle.

The charge management method of a rechargeable battery-powered forklift truck in the present invention is a charge management method of rechargeable battery-powered forklift trucks, each of which is equipped with a secondary battery quickly chargeable by a battery charger. The charge management method includes forming a driving schedule of the rechargeable battery-powered forklift truck which is constituted with a plurality of work cycles, and forming each of the work cycles of the driving schedule which is constituted with a charging pattern which is set as a work period shorter than the continuously drivable time corresponding to a full charge capacity of a secondary battery and a charging pattern corresponding to the full charge capacity.

### Effect of the Invention

According to the present invention, the driving schedule of the rechargeable battery-powered forklift truck is constituted with the plurality of work cycles, and each of the work cycles of the driving schedule is also constituted with the charging pattern which is set as a time shorter than the continuously drivable time corresponding to the capacity of the secondary battery and the pattern.
Thereby, the secondary battery equipped in the rechargeable battery-powered forklift truck will be sufficient in capacity which allows use of the forklift truck only for the time covering the driving pattern of each of the work cycles which constitutes the driving schedule, thus resulting in a reduced capacity of the secondary battery. As a result, even when a quickly chargeable lithium ion battery (a secondary battery) is used, it is possible to carry out work during the daytime trouble-free without any significant cost burden such as enhancement of charging facilities.

### Brief Description of Drawings

Fig. 1 is a general view which shows a charge management system for rechargeable battery-powered forklift trucks.
Fig. 2 is a time chart which shows a work schedule applied to an embodiment of the present invention.
Fig. 3 is a time chart (1) which shows a work schedule of conventional technology
Fig. 4 is a time chart (2) which shows a work schedule of conventional
technology.

### Mode for Carrying Out the Invention

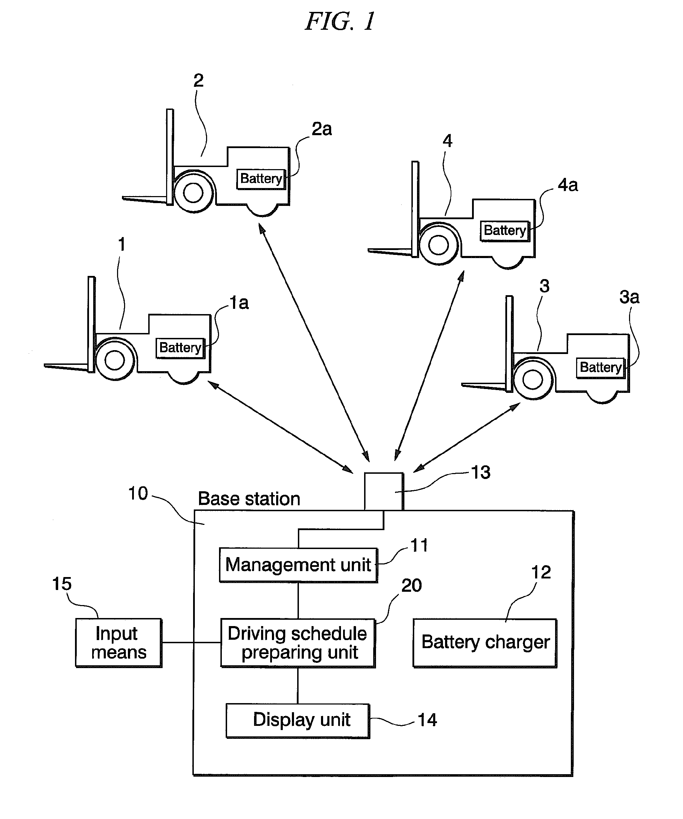

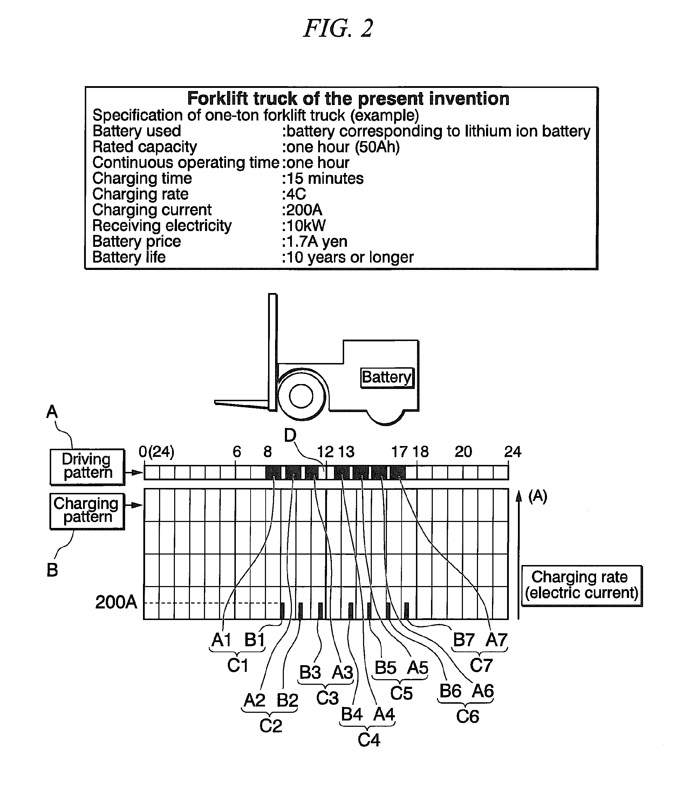

A description will be given of one embodiment of the present invention with reference to Fig. 1 and Fig. 2.
Fig. 1 is a general view which shows the charge management system for rechargeable battery-powered forklift trucks in the present embodiment in which four forklift trucks (in the drawing, they are given as a forklift truck 1, a forklift truck 2, a forklift truck 3, and a forklift truck 4) are used and the forklift trucks 1 to 4 are respectively provided with quickly chargeable small-size lithium ion batteries 1a to 4a as secondary batteries.

On the other hand, a base station 10 is installed inside a work area of the forklift trucks 1 to 4. The base station 10 is provided with a driving schedule preparing unit 20 which prepares a driving schedule, that is, a charging schedule of each of the forklift trucks 1 to 4, a management unit 11 which outputs a return command/a departure command, and the like, to each of the forklift trucks 1 to 4 according to the driving schedule prepared by the driving schedule preparing unit 20, a battery charger 12 which charges the lithium ion batteries 1a to 4a equipped in the forklift trucks 1 to 4, communication means 13 which carries out communication with the forklift trucks 1 to 4 based on the return command/the departure command, a display unit 14 which displays the driving schedule prepared by the driving schedule preparing unit 20, and input means 15 which inputs various data to the driving schedule preparing unit 20.

For example, characteristic data (rated capacity, shortest quick charge time, charging current value, receiving electricity value, and the like.) of the lithium ion batteries 1a to 4a respectively equipped in the forklift trucks 1 to 4 is input via the input means 15 to the driving schedule preparing unit 20. The driving schedule preparing unit 20 prepares the driving schedule shown in Fig. 2, for example, based on the above-described input data.
The driving schedules are prepared in a plural number for each of the forklift trucks 1 to 4. However, here, a description will be given of one driving schedule.

As shown in Fig. 2, the driving schedule is constituted with a driving pattern A made up of a plurality of driving periods A1 to A7 and a charging pattern B made up of a plurality of charging periods B 1 to B7.
The driving periods A1 to A7 of the driving pattern A and the charging periods B1 to B7 of the charging pattern B are alternately performed. A first work cycle C1 is made up of the driving period A1 and the charging period B1. In the same manner, a second work cycle C2, a third work cycle C3, a fourth work cycle C4, a fifth work cycle C5, and a sixth work cycle C6 are respectively made up of the driving period A2 and the charging period B2, the driving period A3 and the charging period B3, the driving period A4 and the charging period B4, the driving period A5 and the charging period B5, and the driving period A6 and the charging period B6.

In the present embodiment, each of the driving periods A1 to A7 of the driving pattern A is set to be one hour, and each of the charging periods B 1 to B7 of the charging pattern B is set to be 15 minutes according to the properties of the lithium ion batteries 1a to 4a. Thereby, each of the work cycles C1 to C7 is set to be one hour and 15 minutes. That is, in the driving schedule shown in Fig. 2, with a break (indicated by a reference numeral of D) taken around 12 pm, there is established the driving schedule which is alternately and repeatedly made up of one hour of driving of the forklift trucks 1 to 4 and 15 minutes of a charge.
Then, based on the work cycles C1 to C7 of the driving schedule, the management unit 11 outputs a return command/a departure command, and the like, to the forklift trucks 1 to 4 via the communication means 13, thereby providing operators of the forklift trucks 1 to 4 with driving instructions.

Hereinafter, a description will be given of reasons why each of the work cycles C1 to C7 is set to be one hour and 15 minutes in the above-described driving schedule.
It is difficult to quickly charge a lead acid battery. However, it is possible to quickly charge a quick charging/discharging secondary battery such as a lithium ion battery within a short period of time. Then, where the electric-driven forklift trucks 1 to 4, each of which is equipped with the above-described lithium ion battery, are unable to be used any more due to a fall in battery level of the lithium ion battery (however, on the assumption that they are able to move to a charging station), only 15 minutes of a quick charge enables the forklift trucks to be used substantially for about one hour after the charge.

In general, where a lead acid battery is quickly charged, a 15 minute charge will enable a forklift truck to be used at most for about 15 minutes, which is not efficient. An additional quick charge will greatly deteriorate the battery and cannot be carried out due to a rise of temperature. However, when quickly charged for 15 minutes, a currently available high-performance lithium ion battery enables a forklift truck to be used for one hour. A short charging time of 15 minutes will not pose any problem as an idle time, even during important operating time during the daytime. In practice, where a forklift truck is used continuously for one hour or more, an operator will take a break. Thus, quick charge will be carried out during, for example, the break or lunch-time break, thus making it possible to use time effectively.

Therefore, as described above, it is possible to use the forklift truck in the work cycles C1 to C7, each of which is made up of one-hour continuous use and a 15-minute quick charge (the lunch-time break, etc., can be effectively used). Unlike a conventional forklift truck, the forklift truck is not to be used continuously for about eight hours in one day by one-time full charge. Thus, for example, if the forklift truck is to be used continuously for up to one hour (the forklift truck is used repeatedly by being quickly charged for about 15 minutes during a break taken every one hour, lunch-time break, etc.), the electric capacity of the battery equipped in the forklift truck can be reduced to about 1/8, as compared with the electric capacity of a conventional forklift truck which is used continuously for eight hours.
That is, the above-described lithium ion batteries 1a to 4a are lower in total battery capacity on a quick charge and also small in electric current (electricity) necessary for the charge. The necessity for setting up large facilities for receiving electricity due to an increase in the input-side electricity of a battery charger as found in a large-capacity lithium ion battery which allows eight-hour continuous use is eliminated. It is, thereby, possible to eliminate user burden such as investment in facilities and the like.

In addition, a high-performance lithium ion battery is reduced to about half in volume and mass for the same electric capacity, as compared with a lead acid battery. Therefore, the space occupied by the lithium ion battery in each of the forklift trucks 1 to 4 is drastically reduced, together with a reduction in volume and mass thereof. Thereby, the forklift truck can be made small in terms of total dimension, with the same working performance maintained. Further, the forklift truck is also reduced in weight to improve the traveling performance and maneuverability through adjustment of the center of gravity. Also, due to downsizing, the forklift truck is improved in layout inside the vehicle and design of the appearance, in addition to mobility
Further, since the lithium ion batteries 1a to 4a are downsized, it is possible to use a vehicle body identical in structure to that of an engine-driven forklift truck narrow in internal space. This fact contributes significantly to common use of components and reduction in cost. That is, in the present embodiment, application based on an idea so far described, there are used a battery excellent in charging/discharging properties such as a lithium ion battery smaller in electric capacity, that is, about 1/8, and quick charging facilities moderate in output so as to correspond to the battery, thus making it possible to provide a forklift truck more suitable in operability and performance than a conventional forklift truck equipped with a currently available lead acid battery for continuous use during the daytime of one day.

As a detailed description has been given so far, according to the charge management system of the present embodiment, the driving schedule of the forklift trucks 1 to 4 is made up of the plurality of work cycles C1 to C7, and each of the work cycles C1 to C7 of the driving schedule is also constituted with the charging pattern B (B 1 to B7) set to be shorter than the continuously drivable time corresponding to the electric capacity of the secondary battery and the driving pattern A (A1 to A7) performed after a charge.
Thereby, the secondary battery equipped in each of the forklift trucks 1 to 4 is sufficient in electric capacity which allows the forklift truck to be used only for a time of each of the driving patterns A (A1 to A7) in each of the work cycles C1 to C7 which constitutes the driving schedule. It is, thus, possible to downsize the capacity of the secondary battery. As a result, use of the quickly chargeable lithium ion battery (the secondary battery) makes it possible to carry out work during the daytime trouble-free without significant cost burden such as enhancement of charging facilities.

Further, the quickly chargeable lithium ion batteries (the secondary batteries) are used in the forklift trucks 1 to 4 to obtain the following effects.
(1) In the present embodiment, it is possible to carry out a quick charge for about 15 minutes at maximum. Thereby, due to the short duration of time, during a substantial duration of about one hour, the forklift trucks can be charged without an idle time at any interval such as a lunch-time break or any break at a work site and used instantly. Each of the forklift trucks can be provided with excellent performance such as better mobility than conventional forklift trucks, even with low battery levels, without any increase in user burden of facilities for receiving electricity which has been caused by a quick charge.
(2) The lithium ion batteries 1a to 4a are downsized, by which the forklift trucks can be easily laid out and improved in design. Thus, they are reduced in size and weight resulting in improved mobility and maneuverability.
(3) Due to features of lithium ion batteries (they are quickly chargeable and natural cooling after a charge is not required), the forklift trucks can be quickly charged at any time in a short time and used for a substantial duration of time. Thereby, the forklift trucks are free of restriction such as limited one shift use by one lead acid battery and can be used trouble-free, for example, 24-hour use.
(4) Downsizing of the batteries contributes significantly in reduction labor necessary for maintenance and management, thus making it possible to improve sales of batteries by lease as a business model and the product value of forklift trucks in which the batteries are equipped. A high-performance battery such as a lithium ion battery is significantly reduced in volume and mass in the form of a battery pack, as compared with a currently available lead acid battery due to the fact that the lithium ion battery is reduced in electric capacity (to 1/8 in the present embodiment). The lithium ion battery can be reduced to 1/10 or less in terms of mass ratio with respect to electric capacity, although this depends on the use. The lithium ion battery is particularly less likely to require maintenance in particular. However, where consideration is given to commercial use including maintenance and management as well as lease of the battery pack and so on, apart from a vehicle, remarkable downsizing of the battery which can be used for a short time and quickly chargeable in a short time is quite advantageous. This will make a contribution to business activities in this field.
(5) An increase in battery cost resulting from use of an expensive high-performance battery can be suppressed mainly due to reduction in electric capacity. It is, thereby, possible to provide a more economically feasible vehicle.

In the above-described embodiment, a nickel-hydrogen battery may be used as the secondary battery other than a lithium ion battery. However, when the lithium ion battery is quickly charged for about 10 to 15 minutes or less at about 90% or more of a full charge, the battery attains a charging efficiency only at which at least 90% or more of electricity used in the charge is accumulated as energy inside the battery (that is, charging efficiency is 90% or more). Since the lithium ion battery is charged in a highly efficient manner and free of abnormal heat generation, it is appropriately used in the rechargeable battery-powered forklift trucks 1 to 4.

Further, each of the lithium ion batteries 1a to 4a equipped in the forklift trucks 1 to 4 may be provided with a forced air-cooling fan for cooling the battery, whenever necessary.

Still further, in the charge management system for the forklift trucks shown in Fig. 1, where one battery charger 12 is installed to charge the lithium ion batteries 1a to 4a, the charging time may be delayed so that each of the forklift trucks 1 to 4 is different in charging time. Further, a plurality of battery chargers 12 may be installed to prepare an unlimited driving schedule.

In addition, in the above embodiment, each of the driving periods A1 to A7 of the driving pattern A in each of the work cycles C 1 to C7 is set based on one hour, respectively However, each of the driving periods A1 to A7 of the driving pattern A and each of the charging periods B 1 to B7 of the charging pattern B are changed in time, whenever necessary, based on a rated capacity of each of the lithium ion batteries 1a to 4a.

A description has been so far given of preferred embodiments of the present invention, to which the present invention shall not be, however, limited. The present invention may be subjected to addition of the constitution, omission, replacement, and other modifications within a scope not departing from the gist of the present invention. The present invention shall not be limited by the above description but will be limited only by the scope of the attached claims.

### [Industrial Applicability]

The present invention relates to a charge management system for rechargeable battery-powered forklift trucks which is applicable to quickly chargeable lithium ion batteries (secondary batteries). The present invention is able to carry out work during the daytime efficiently and trouble-free without significant cost burden such as enhancement of charging facilities.

### [Description of Reference Numerals]

1 to 4: Forklift truck
1a to 4a: Lithium ion battery (secondary battery)
12: Battery charger
20: Driving schedule preparing unit
A: Driving pattern
A1 to A7: Driving period
B: Charging pattern
B1 to B7: Charging period
C1 to C7: Work cycle

## Claims

1. A charge management system for a rechargeable battery-powered forklift truck, which is equipped with a secondary battery which is quickly chargeable by a battery charger,
the charge management system comprising:
a driving schedule preparing unit which prepares a driving schedule of the rechargeable battery-powered forklift truck; and
a management unit which outputs a command to the rechargeable battery-powered forklift truck according to the driving schedule prepared by the driving schedule preparing unit, wherein
the driving schedule preparing unit constitutes the driving schedule of the rechargeable battery-powered forklift truck with a plurality of work cycles and also constitutes each of the work cycles of the driving schedule with a charging pattern which is set as repetition of a work period shorter than the continuously drivable time corresponding to a full charge capacity of the secondary battery.

2. The charge management system for the rechargeable battery-powered forklift truck according to claim 1, wherein
the length of a charging period immediately before a work period which is under a driving schedule and not yet performed is decided based on expected operating electricity during a driving period which is a work period immediately after the charging period.

3. The charge management system for the rechargeable battery-powered forklift truck according to claim 1, wherein
the secondary battery is a lithium ion battery with a capacity necessary for continuously driving for the longest work period in the driving pattern of each of the work cycles.

4. The charge management system for the rechargeable battery-powered forklift truck according to claim 1 or claim 2, wherein
each of the work cycles is determined based on the driving pattern including a predetermined driving period and a predetermined charging period.

5. The charge management system for the rechargeable battery-powered forklift truck according to any one of claim 1 to claim 3, wherein
during working hours in the daytime, the charging pattern and the driving pattern are alternately performed based on the work cycle.

6. A charge management method of a rechargeable battery-powered forklift truck, which is equipped with a secondary battery quickly chargeable by a battery charger,
the charge management method comprising:
forming a driving schedule of the rechargeable battery-powered forklift truck which is constituted with a plurality of work cycles; and
forming each of the work cycles of the driving schedule which is constituted with a charging pattern which is set as a work period shorter than the continuously drivable time corresponding to a full charge capacity of a secondary battery and a charging pattern corresponding to the full charge capacity.
